# EUROPEAN PATENT APPLICATION

(11) **EP 1 852 492 A1**
(43) Date of publication of application: **07.11.2007**
(21) Application number: 06113581.0
(22) Date of filing: 05.05.2006
(51) Int. Cl.: C10B 53/02, C10B 57/08, C10G 1/00, C10G 1/04

(54) **Method of making a polymeric material of photosynthetic origin comprising particulate inorganic material**

(71) Applicant: BIOeCON International Holding N.V., Curaçao (AN)
(72) Inventor: O'CONNOR, Paul, 3871 KM, Hoevelaken (NL)
(74) Representative: Rasser, Jacobus Cornelis

(57) **Abstract**

Disclosed is a method of making a polymeric material of photosynthetic origin susceptible to defibrillation and/or depolymerization. The method is particularly suitable for use in processes whereby the polymeric material is converted to fuels in liquid or gas form, and/or to valuable specialty chemicals.

In a specific embodiment, the polymeric material comprises biomass, more specifically, the polymeric material comprises cellulose and lignocellulose.

## Description

### BACKGROUND OF THE INVENTION

### 1. Field of the Invention

The present invention relates to a method of making a polymeric material of photosynthetic origin susceptible to defibrillation and/or depolymerization.

The method is particularly suitable for use in processes whereby the polymeric material is converted to fuels in liquid or gas form, and/or to valuable specialty chemicals.

In a specific embodiment, the polymeric material comprises biomass, more specifically, the polymeric material comprises cellulose and lignocellulose.

### 2. Description of the Related Art

Polymeric materials of photosynthetic origin are produced in large volumes in agriculture and forestry. Many of these materials are intended for use as food products for human consumption, in animal feed, or other forms of valuable materials. For example, forestry products are used as construction materials in the form of lumber, plywood, paper and paper products, paper byproducts, and the like.

Incidental to the production of agricultural and forestry products, the world produces vast quantities of agricultural and forestry waste. Examples include wood chips, saw dust, straw, corn husks, bagasse, and the like. Attempts have been made to convert these waste materials to useful products. In general, these waste materials are converted to products of low intrinsic value, such as compost. Attempts to convert these materials to products of a higher value have met with limited success. For example, conversion of agricultural waste to ethanol by fermentation is a time-consuming and expensive process. Moreover, even the most sophisticated fermentation enzymes are only able to convert at most about 50 percent of the available material. The remaining 50 percent is immune to attack by fermentation enzymes and is sometimes referred to as "recalcitrant cellulose" for this reason.

In addition it has been suggested to grow aquatic plants, such as algae, as way of obtaining energy from a renewable resource. This is attractive because aquatic plants tend to be more efficient in converting solar energy to plant mass. However, to date no good methods are available to convert this plant mass to readily usable fuels.

It is an object of the present invention to provide a method for making polymeric material of photosynthetic origin more susceptible to defibrillation and/or depolymerization, so that it is more easily converted to liquid or gaseous fuel or to specialty chemicals.

### BRIEF SUMMARY OF THE INVENTION

The present invention relates to a method of making a photosynthetic polymeric material susceptible to defibrillation and/or depolymerization. The method comprises the steps of:
soaking a polymeric material of photosynthetic origin with a solution of a precursor of a solid inorganic material in a suitable solvent;
converting said precursor to the solid inorganic material.

In a specific embodiment, the polymeric material comprises biomass. More specifically, the polymeric material comprises cellulose or lignocellulose.

The inorganic material may be inert, for example a salt of an alkali metal or earth alkaline metal. In an alternate embodiment, the inorganic material may have catalytic activity. Examples include clays, zeolites, anionic clays, silicas, silica-aluminas, metal hydroxyl salts, cationic layered materials, and the like.

### DESCRIPTION OF ILLUSTRATIVE EMBODIMENTS

The following is a description of certain embodiments of the invention, given by way of example only.

The present invention is based on the discovery that certain polymeric materials of photosynthetic origin can be made more susceptible to defibrillation and depolymerization by embedding therein small particles of an inorganic material.

Preferred for use in the present invention are polymeric materials comprising biomass, in particular polymeric materials comprising cellulose or lignocellulose.

The term biomass, as used herein, is a material of plant origin, preferably containing a significant amount of cellulose and or lignocellulose. In general, biomass is a material produced by the photosynthetic conversion in plants of carbon dioxide and water under the influence of solar energy. The plants that are the origin af the biomass may be land-based or may be aquatic plants. Examples of land-based plants producing significant amounts of biomass include cereal grains (including corn), grasses, sugar cane, trees, and the like. Examples of aquatic plants producing biomass include algae, seaweed, and the like.

Inorganic particles are embedded in the photosynthetic polymeric material by providing a solution of a precursor of the inorganic material in a suitable solvent; soaking the photosynthetic polymeric material with this solution, and converting the precursor to the solid inorganic material.

It will be understood that the term "solution" as used in this context includes dispersions, emulsions, and slurries (which could be seen as a special form of suspension). The solvent provides a vehicle allowing the precursor of the solid inorganic material to penetrate the photosynthetic polymeric material.

In a preferred embodiment, the inorganic material is present in a crystalline or quasi-crystalline form.

The inorganic material may be an inert material, or it may be a material having catalytic properties. Examples of inert materials include inorganic salts, in particular the salts of alkali and earth alkaline metals. Although these materials do not contribute to a subsequent chemical conversion of the polymeric material, it is believed that the incorporation of small particles of these materials into the biomass results in a mechanical breakup of the structure of the biomass. As a result of this breakup, the biomass particles become more accessible to microorganisms and or chemicals used in the subsequent conversion. This mechanical breakup is particularly strong if the particles are in crystalline or quasi-crystalline form.

In a preferred embodiment, the inorganic particles have catalytic properties. These materials provide a mechanical breakup, similar to inert inorganic materials. In addition, these materials provide catalytic properties that accelerate the subsequent chemical conversion of the polymeric material. By being embedded in the polymeric material, the catalytic particles are in intimate contact with the polymeric material to be converted. Accordingly, the catalytic effect is enhanced as compared to a simple mechanical mixture of the polymeric material with catalytic particles.

Examples of inorganic materials having catalytic properties include oxides, in particular aluminas, silicas, silica-aluminas; clays; zeolites; anionic clays; cationic layered materials; LDHs; smectites; saponites; sepiolites; metal hydroxyl salts, and the like. It will be understood that mixtures of these materials may also be used.

The inorganic particles embedded in the polymeric materials generally have an average particle size in the range of from 5 micrometers to 10 nanometers, preferably in the range of from 500 to 50 nanometers.

In general, method of the present invention comprises the steps of:
a. soaking a polymeric material of photosynthetic origin with a solution of a precursor of a solid inorganic material in a suitable solvent;
b. converting said precursor to the solid inorganic material.

The term "precursor material to the inorganic particles" as used herein means a material that is soluble in a suitable solvent and that can be converted to the inorganic particles. This term includes the inorganic material *per se* in a solution, such that inorganic particles may be formed by precipitation and or crystallization. The term also includes solutions of materials that may be converted to inorganic particles by chemical reaction. For example, alumina may be formed by reacting a soluble aluminum salt with a source of hydroxyl ions, or by reacting an acid salt, such as aluminum sulfate, with a basic salt, such as sodium aluminate.

A suitable solvent is any solvent that dissolves the precursor material and that is compatible with the desired subsequent conversion of the precursor material to the inorganic particles. Water is an example of such a suitable solvent, and is in many cases preferred because of its low cost and its ease of handling and its high safety. However, other solvents may be preferred for their specific properties. For example, lower alcohols such as methanol and ethanol have a much lower heat of evaporation than water and may therefore be preferred under certain circumstances. Such solvents may be relatively abundant, which lowers their costs. For example, ethanol is produced in large quantities from sugar. As a result, sugar plantations may have ethanol available at a relatively low cost. Other solvents may be produced as a byproduct in the subsequent treatment of the biomass. Examples include phenols, other alcohols, and carboxylic acids. These solvents will be abundantly available at the site where conversion of biomass takes place, which makes them a desirable solvent for use in the present invention.

To aid penetration of the solvent, a swelling agent may be added. Suitable swelling agents include bases and acids. It will be understood that, if the solvent comprises an acid, such as a carboxylic acid, it is not desirable to use a base for a swelling agent. In this case, acids are preferred swelling agents.

In general, it is desirable to provide a high concentration of precursor material in the solution. Care should be taken however to avoid premature precipitation of the inorganic material. Therefore, it is advantageous to utilize concentrations that are near, but safely below, the saturation concentration of the precursor material in the solvent.

The solution comprising the precursor to the inorganic particles is contacted with the polymeric material of photosynthetic origin. To ensure an intimate contact of the solution with the polymeric material, it is preferred to provide the polymeric material in a small particles size. Preferably, the polymeric material is presented in the form of particles having an average particles size of less than 1 mm, more preferably less than 100 micrometers, even more preferably less than 50 micrometers. The particles may be as small as one micrometer, but it is in general not necessary to provide particles smaller than about 10 micrometers. Processes for reducing the size of biomass particles, which are relatively soft, are well-known and are not part of the present invention.

After contacting the biomass particles with the solution containing the precursor to the inorganic particles, the solution is allowed to penetrate the biomass particles. The time required for this penetration depends on the average particle size of the biomass particles, the viscosity of the precursor solution, the specific solvent used, the water content of the biomass particles, and the temperature at which the penetration takes place. In general, the penetration can be accelerated by slowly agitating the mixture of biomass particles and precursor solution. Typically, the penetration time ranges from several minutes to several hours.

After the solution has been allowed to penetrate the biomass particles, it may be desirable to drain off any excess solution, in particular if evaporation of the solvent is involved in the precipitation/crystallization step. It is preferable, however, to use an amount of solution such that virtually all of it is soaked up by the biomass particles. In this way, maximum penetration is achieved, while the need for drain off excess solution is avoided. In general, the penetration can be accelerated by slowly agitating the mixture of biomass particles and precursor solution, and/or by raising the temperature. Typically, the penetration time ranges from several minutes to several hours.

In the next step, the conditions are changed such as to initiate precipitation or crystallization of the inorganic material within the particles of polymeric material. Depending on the type of inorganic material, precipitation or crystallization may be initiated by (partially) evaporating the solvent; by changing the pH; by changing the temperature; or by a combination of these measures. For example, crystallization of an alkali metal salt or an earth alkali metal salt may be triggered by evaporation of the solvent, or by a lowering of the temperature. By way of other example, an insoluble hydroxide may be formed by raising the pH of a solution of the appropriate metal cation. It is possible to precipitate an amorphous inorganic material by raising the pH, and subsequently converting the amorphous material to a crystalline material by aging under the appropriate conditions of temperature and pressure, using techniques well known in the art.

In a specific embodiment, the inorganic material comprises small particles of an oxide. Examples of suitable oxides include alumina, zirconia, titania, silica, and alumina silica. Alumina is preferred.

Other examples of suitable inorganic materials include clays, such as smectite, sapiolite, saponites, and the like; zeolites; hydrotalcites, cationic layered materials; LDHs, and Anderson Oxides.

The term "hydrotalcites" as used herein includes hydrotalcite itself, which is a mixed Mg/Al oxide, and other mixed oxides of divalent and trivalent metals having crystal structures similar to that of Mg/Al hydrotalcite.

The incorporation of solid inorganic material into a photosynthetic polymeric material makes the latter more susceptible to defibrillation, to depolymerization, or to both defibrillation and depolymerization. As such, the method of the present invention may be used as a preliminary treatment of biomass in a method for converting biomass to bio-oil.

Accordingly, the invention comprises, in a preferred embodiment, a method of converting biomass to bio-oil, comprising the steps of:
a. Impregnating the biomass with a solution of a precursor of a solid inorganic material in a suitable solvent;
b. Converting said precursor to the solid inorganic material to form a sensitized biomass;
c. Subjecting the sensitized biomass to mild depolymerization conditions.

The term "bio-oil", as used herein, generally refers to the mixture of liquid organic materials obtained in thermal, hydrothermal or catalytic conversion of biomass. The composition varies greatly, depending on the conversion method that is utilized, and the reaction conditions. The organic materials in the mixture typically comprise oxygen-containing compounds, such as alcohols, esters, ketones and aldehydes.

In a preferred embodiment, the mild depolymerization conditions comprise mild hydrothermal treatment conditions. In an alternate embodiment, the mild depolymerization conditions comprise hydrolysis conditions. Preferably, the mild depolymerization conditions comprise a temperature in the range of from 20 to 200 °C, and a pressure in the range of from 1- to 20 bar.

In a preferred embodiment, the solvent comprises water, and/or an alcohol, and/or a carboxylic acid. It is further preferred to use a solvent comprising a swelling agent. Acids and bases are examples of suitable swelling agents.

The solid inorganic material may be amorphous, or quasi-crystalline, or crystalline. Quasi-crystalline and crystalline inorganic materials are preferred.

Preferred inorganic materials are metal hydroxyl salts and mixed metal oxides, in particular mixed oxides of divalent and trivalent metals. A preferred divalent metal is Mg. A preferred trivalent metal is Al. The preparation of such materials is exemplified herein for aluminum containing materials. The skilled person will be able to make the necessary adjustments to prepare materials containing other metal ions.

The use of refractory oxides in the method of the present invention is illustrated below for alumina. The skilled person will be able to make the necessary adjustments for other refractory oxides.

Cellulose containing material, such as biomass, is ground to a particle size of about 50 micrometers. The material is contacted with an aqueous solution of aluminum ions. The aluminum ions may be Al³⁺, as in AlCl₃, or may be an anion, as in sodium aluminate. The aqueous solution is allowed to penetrate the biomass particles during about 30 minutes. After the penetration step, in case an acidic aluminum salt is used, the pH of the solution is raised to about 10 by adding a base. The base solution is allowed to penetrate the biomass particles during about 30 minutes. The resulting slurry is then aged at elevated temperature for several hours, after which excess liquid is drained off and the biomass particles are dried. X-ray diffraction confirms the presence of crystalline alumina. In case a basic aluminate salt is used, precipitation is triggered by lowering the pH by addition of an acid.

The alumina-containing material is gently heated in an autoclave at 140 °C and autogenous pressure for about 30 minutes. Decomposition products in gas form are collected and saved for future use as a burning fuel. The liquid conversion product is extracted with a water-immiscible organic solvent, and separated in an aqueous fraction and a non-aqueous fraction. The two fractions are each further processed to liquid fuel compositions.

Another embodiment of the present invention involves the use polymeric materials of photosynthetic origin having embedded therein small particles of a mixed oxide of a divalent metal and a trivalent metal. The preparation of these materials is similar to that described hereinabove for alumina containing polymeric materials, as follows:

A method of converting biomass to bio-oil, comprising the steps of:
a. providing a cellulose-containing polymeric material, such as biomass;
b. providing an aqueous solution of a divalent metal and a trivalent metal;
c. soaking the cellulose polymeric material with the aqueous solution;
d. initiating precipitation of a crystalline inorganic material to form a sensitized biomass;
e. subjecting the sensitized biomass to mild depolymerization conditions.

The method will be illustrated herein with the preparation of biomass particles having embedded therein small particles of hydrotalcite. The skilled person will be able to modify the conditions for preparing other mixed oxides, including hydrotalcite-like anionic clays, and metal hydroxyl salts.

Biomass particles of about 50 micrometers in diameter are soaked with an aqueous solution comprising aluminum ions and magnesium ions. The aqueous solution is allowed to penetrate the biomass particles for about 45 minutes. After penetration, the pH is raised to about 9 by the addition of a base. The base solution is allowed to penetrate for about 30 minutes. The particles are then aged at elevated temperature for about three hours. X-ray diffraction confirms the presence of hydrotalcite crystals.

Another embodiment involves pretreatment of the biomass particles with a basic or an acidic solution before the inorganic additive is introduced or formed.

The materials of the present invention are particularly suitable for conversion to liquid or gaseous fuels, or as a source of valuable specialty chemicals. The presence of the inorganic particles embedded within the polymeric material makes the polymeric material more susceptible to conversion than the corresponding unmodified polymeric material.

A specific example of conversion of a material of the present invention involves fermentation of cellulose or lignocellulose present in the polymeric material. In its untreated form, the polymeric material contains a large amounts, typically about 50 percent, of cellulose that is not accessible to the microorganisms used for the fermentation reaction. This fraction of the cellulose is preferred to as recalcitrant cellulose. As a result of the small inorganic particles embedded in the biomass, a greater fraction of the available cellulose is accessible to the microorganisms used for the fermentation reaction. In other words, the amount of recalcitrant cellulose is reduced as result of the presence of the inorganic particles. Consequently, the yield af the fermentation reaction is increased, and the production of unfermentable cellulosic byproduct is reduced, and in some cases all but eliminated.

Conversion of the materials of the present invention may also be accomplished by hydrothermal treatment. Because of the presence of the inorganic particles, such hydrothermal treatment may be carried out at conditions that are milder than are typically used for conversion of biomass to bio oil. The hydrothermal treatment may result in a certain degree of defibrillation of the biomass, in combination with a certain degree of hydrolysis of the polymers present in the biomass.

### Example 1

### A. Sepiolite

A polymeric material having embedded therein small particles of Sepiolite clay is prepared as follows.

### Step 1:

A suspension of partly dissolved Sepiolite clay is produced by slurrying the clay with an aqueous solution of hydrochloric acid.

### Step 2:

Subsequently this suspension is contacted and mixed with wood particles having a particle size distribution in the range of from 1 micrometer to 100 micrometers. The particles are thoroughly soaked in the suspension of Step 1 for about 60 minutes.

### Step 3:

Next the pH of the suspension formed in Step 2 is increased by the addition of NaOH. As a result, part of the dissolved Sepiolite clay re-crystallizes in the interior of the solid biomass. The presence of the crystalline clay particles is confirmed with X-ray diffraction and microscopy (SEM/TEM).

The example is repeated using sulfuric acid, nitric acid, acetic acid and formic acid, respectively, for dissolving the bentonite clay in step 1. Similar results are obtained.

The example is repeated using KOH, NH₄OH, and urea, respectively, for increasing the pH in step 3. Similar results are obtained.

The example is repeated, except that the pH change in step 3 is accomplished by adding further amounts of clay. Similar results are obtained.

The polymeric material having embedded therein clay particles is gently heated in an autoclave at 180 °C and autogenous pressure for about 30 minutes. A bio-oil rich in oxygen-containing organic compounds is obtained.

### B. Hydrotalcite.

The above experiment is repeated, but using hydrotalcite instead of sepiolite clay. The resulting material comprises wood particles having embedded therein small particles of hydrotalcite.

The example is repeated, except that the hydrothermal treatment of step 3 is carried out at 140 and 220 °C, respectively.

### Example 2

### Step 1:

A solution of MgCl₂ is prepared by dissolving MgCl₂ in water.

### Step 2:

Subsequently this solution is contacted and mixed with straw particles. The particles are thoroughly soaked with the solution of Step 1 for 30 minutes.

### Step 3:

Next the pH of the suspension formed in Step 2 is increased, by the addition of NaOH. As a result, part of the Mg re-crystallizes in the form of MgO and Mg(OH)₂ in the interior of the solid biomass. The presence of crystalline particles is confirmed by X-ray diffraction.

The example is repeated with biomass particles obtained from wood, corn husks, bagasse, and algae, respectively. Similar results are obtained.

### Example 3

### Step 1:

A solution of MgCl₂ is prepared by reacting Mg(OH)₂ with an aqueous solution of HCl.

### Step 2:

Subsequently this solution is contacted and mixed with solid organic biomass particles. The particles are thoroughly soaked with the solution of Step 1. The uptake of moisture is monitored by measuring the loss on ignition (LOI) of the soaked particles, and by chemical analysis monitoring the concentration of the inorganic material in the solution. The soaking is considered completed when no significant change is recorded in the measured LOI after a 10-minute interval.

### Step 3:

Next the suspension formed in Step 2 is partly dried. As a result, part of the Mg re-crystallizes in the form of MgO and Mg(OH)₂ in the interior of the solid biomass. The presence of crystalline material is confirmed with X-ray diffraction, and by microscopy (SEM/TEM).

### Step 4:

The material produced under Step 3 is heated under atmospheric conditions to a temperature of 250 °C. Part of the solid biomass is converted to a liquid biomass (bio-oil).

### Step 5:

The liquid bio-oil produced in Step 4 is separated from the residual solid. The residual solid biomass is burned off. The heat energy produced is used for the hydrothermal treatment of additional Mg-containing biomass. The ashes, which are rich in MgO, are dissolved in dilute acid, and re-used in Step 1.

The example is repeated, except that the treatment of step 4 is carried out at 150, 200, 300, and 400°C, respectively.

The example is repeated at 150, 200 and 300 °C and autogenic pressure.

The conversion of Mg-containing biomass to bio-oil proceeds more rapidly than that of untreated biomass. The conversion of solid biomass to bio-oil increases with increasing temperature and increasing pressure.

### Example 4

### Step 1:

A solution of FeCl₃ is prepared by dissolving FeCl₃ in water.

### Step 2:

Subsequently this solution is contacted and mixed with a solid organic biomass comprised of wood and/or straw particles. The particles are thoroughly soaked with the solution of Step 1 until no further solution is absorbed, as determined by LOI and by chemical analysis (see Example 3).

### Step 3:

Next, the pH of the suspension formed in Step 2 is increased, by the addition of NaOH. As a result, part of the Fe re-crystallizes in the form of Fe₂O₃ and Fe(OH)₃ in the interior of the solid biomass. The presence of crystalline material is confirmed by X-ray diffraction and microscopy (SEM/TEM).

### Step 4:

The material produced under Step 3 is subjected to treatment as described in Example 3, leading to the conversion of part of the solid biomass to a liquid biomass (bio-oil).

### Step 5:

The liquid bio-oil as produced in Step 4 is separated from the solid. The residual solid biomass is burned off, and the heat energy produced is used for hydrothermal treatment of additional Fe-containing biomass. The ashes, which are rich in Fe₂O₃, are dissolved in acid and recycled to Step 1.

Thus, the invention has been described by reference to certain embodiments discussed above. It will be recognized that these embodiments are susceptible to various modifications and alternative forms well known to those of skill in the art.

Many modifications in addition to those described above may be made to the processes described herein without departing from the spirit and scope of the invention. Accordingly, although specific embodiments have been described, these are examples only and are not limiting upon the scope of the invention.

## Claims

1. A method of making a polymeric material of photosynthetic origin susceptible to defibrillation or depolymerization, said method comprising the steps of:
a. soaking the polymeric material with a solution of a precursor of a solid inorganic material in a suitable solvent;
b. converting said precursor to the solid inorganic material.

2. The method of claim 1 wherein the solid inorganic material has catalytic properties.

3. The method of claim 1 or 2, wherein the solvent comprises water.

4. The method of any one of claims 1-3, wherein the solvent comprises an alcohol.

5. The method of any one of the preceding claims wherein the solvent comprises a carboxylic acid.

6. The method of any one of the preceding claims wherein the polymeric of photosynthetic material comprises biomass.

7. The method of any one of the preceding claims wherein the solid inorganic material comprises clay, silica, silica-alumina,, a transition metal hydroxide, a metal hydroxyl salt, zeolite, hydrotalcite, cationic layered material, anionic clay, LDH, smectite clay, saponite, sepiolite, or a mixture thereof.

8. The method of any one of the preceding claims wherein the precursor is converted to the solid inorganic material by a measure comprising changing the pH, changing the temperature, evaporating the solvent, aging, or a combination thereof.

9. The method of any one of the preceding claims wherein the inorganic material is a hydrotalcite.

10. A method of converting biomass to bio-oil, comprising the steps of:
a. impregnating the biomass with a solution of a precursor of a solid inorganic material in a suitable solvent;
b. converting said precursor to the solid inorganic material to form a sensitized biomass;
c. subjecting the sensitized biomass to mild depolymerization conditions.

11. The method of claim 10 wherein the mild depolymerization conditions comprise mild hydrothermal treatment conditions.

12. The method of claim 10 or 11 wherein the mild depolymerization conditions comprise hydrolysis conditions.

13. The method of any one of claims 10-12 wherein the mild depolymerization conditions comprise a temperature in the range of from 20 to 200 and a pressure in the range of from 1 to 20 bar.

14. The method of any one of claims 10-13 wherein the solvent comprises water.

15. The method of any one of claims 10-14 wherein the solvent comprises an alcohol.

16. The method of any one of claims 10-15 wherein the solvent comprises carboxylic acid.

17. The method of any one of claims 10-16 wherein the solvent further comprises a swelling agent.

18. The method of any one of claims 10-17 wherein the inorganic material is in crystalline or quasi-crystalline form.

19. The method of any one of claims 10-18 wherein the biomass comprises cellulose and/or lignocellulose.

20. The method of any one of claims 10-19 wherein the inorganic material comprises a divalent metal and a trivalent metal.

21. The method of any of claim 20 wherein the divalent metal is Mg.

22. The method of claim 20 or 21 wherein the trivalent metal is Al.

23. The method of any one of claims 20-22 wherein the inorganic material is hydrotalcite.
